# EUROPEAN PATENT APPLICATION

(11) **EP 2 466 833 A1**
(43) Date of publication of application: **20.06.2012**
(21) Application number: 11193582.1
(22) Date of filing: 14.12.2011
(51) Int. Cl.: H04L 12/56

(54) **Routing system and method in Power Grid Communication**

(30) Priority: 17.12.2010 US 971299
(71) Applicant: General Electric Company, Schenectady, NY 12345 (US)
(72) Inventor: BUSH, Stephen Francis, Niskayuna, NY New York 12309 (US); MAHONY, Michael Joseph, Niskayuna, NY New York 12309 (US)
(74) Representative: Bedford, Grant Richard

(57) **Abstract**

A system and method (200) of data communication for a power grid determines available wired and wireless modes (202) of data transmission and the available routes (204) in the available wired and wireless modes. A weight is allocated (206) to each of the available routes and a final route for communication is determined (208) based on an objective function.

## Description

### BACKGROUND

A smart grid delivers electricity to consumers while leveraging digital communication and control technologies to minimize financial cost, save energy, and increase reliability. If designed properly, the smart grid will have a significant impact on improving a wide range of aspects in the electric power generation and distribution industry. Examples include self-healing, high-reliability, resistance to cyber attack, accommodation of a wide variety of types of distributed generation and storage mechanisms, optimized asset allocation, and minimization of operation and maintenance expenses as well as high-resolution market control that incorporates advanced metering and demand-response.

An important component of the smart grid is Distribution Automation (DA), which refers to the monitoring, protection, control, and communication functions that occur between the substation and the premises or consumer. Protection and switching are important DA functions. DA protection systems should be able to automatically and properly: 1) detect and isolate a fault in the distribution grid, 2) determine whether distribution substations adjacent to the fault have enough connectivity and capacity to restore electrical service to consumers disconnected by the fault isolation equipment, and 3) operate switches to connect the adjacent substations and restore electrical service. Today, most DA protection devices, such as reclosers, do not communicate with each other but operate independently, unaware of the state of other protection devices and the condition of the grid, beyond their own location. This results in less then optimal isolation of faults where a larger then necessary number of consumers experience service outages during a fault.

For these and other reasons, there is a need for embodiments of the present invention.

### BRIEF DESCRIPTION

In accordance with an embodiment of the present invention, a system and method of data communication for a power grid is provided. The system and method includes determining available wired and wireless modes of data communications and determining available routes in the available wired and wireless modes. A weight is allocated to each of the available routes and a final route for communication is determined based on an objective function.

### DRAWINGS

Features and aspects of embodiments of the present invention will become better understood when the following detailed description is read with reference to the accompanying drawings in which like characters represent like parts throughout the drawings, wherein:
FIG. 1 is a diagrammatical representation of an electric utility pole used in electrical distribution systems;
FIG. 2 is a diagrammatical representation of a recloser loop scheme with two feeders;
FIG. 3 is a diagrammatical representation of a recloser system 100 in accordance with an exemplary embodiment of the present invention;
FIG. 4 is a flow chart representing a method of communication in a power grid according to an exemplary embodiment of the present invention; and
FIG. 5 illustrates a power grid communication system according to an exemplary embodiment of the present invention.

### DETAILED DESCRIPTION

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As used herein, the term "module" refers to software, hardware, or firmware, or any combination of these, or any system, process, or functionality that performs or facilitates the processes described herein.

Electrical power generation equipment, transmission and distribution power lines must be protected against temporary and permanent faults and consequent short circuits that may occur on the power lines. These faults could cause a collapse of the power system, serious and expensive equipment damage, and personal injury. Further, extensive power outages caused by these faults may give rise to angst among consumers that expect reliable and trustworthy utility service. It is the function of fault protection devices such as fuses, protective relays, and reclosers, for example, to assist in the isolation of power line faults and initiate isolation by tripping (i.e. opening) circuit breakers, sectionalizers, and reclosers. In addition, power distribution operators employ automatic power restoration components including, but not limited to tie switches to automatically restore electric service to consumers in the event of a protection fault or other system malfunction.

The reclosers are each equipped with communications equipment sufficient to communicate over a predetermined set of wireless and wired systems, including, but not limited to, power line carrier, land line telephony, electric utility radio, WiFi, WiMAX, and cellular telephony, for example.

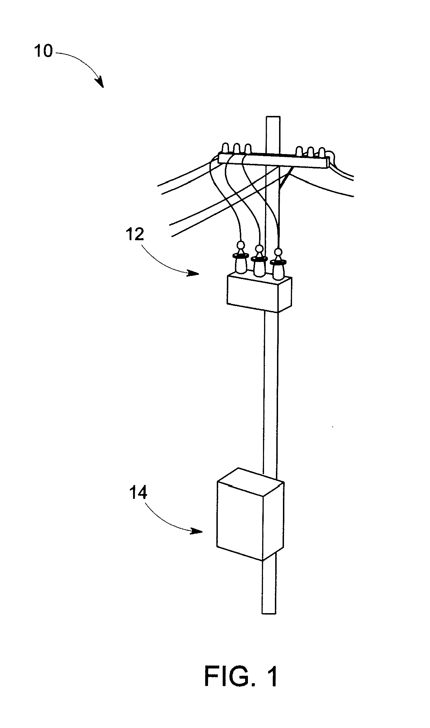

FIG. 1 shows an electric utility pole 10 for use in electrical distribution systems to suspend power lines above the ground. An automatic recloser device 12 with a controller 14 is mounted on electric pole 10 to protect the distribution system. The controller 14 can be arranged separate from the recloser device 12, as shown, or the controller 14 can be integrated with the recloser device 12. The function of recloser device 12 is to provide life safety, protect equipment, and minimize power distribution interruptions caused by temporary or permanent faults. Typically, during a fault the current carried by the power lines will suddenly increase due to a short-circuit condition. The recloser senses this current rise and opens its breaker, and thereby cutting off current flow in order to protect distribution system components and other equipment connected to the distribution system. Since many fault conditions are temporary, the recloser is designed to close after a short period of time, and determine if the fault is still present. Once the recloser closes and if the increased current is still present, it will again open. Such transition between open and closed may quickly occur several times before the recloser remains open if the fault is permanent. For example, during a thunderstorm, if lightning were to strike the distribution system, the power to a consumer may be temporarily disrupted for a few seconds, with the resulting recloser action causing lights and appliances to turn OFF (recloser opening), then ON (recloser closing) at consumer premises.

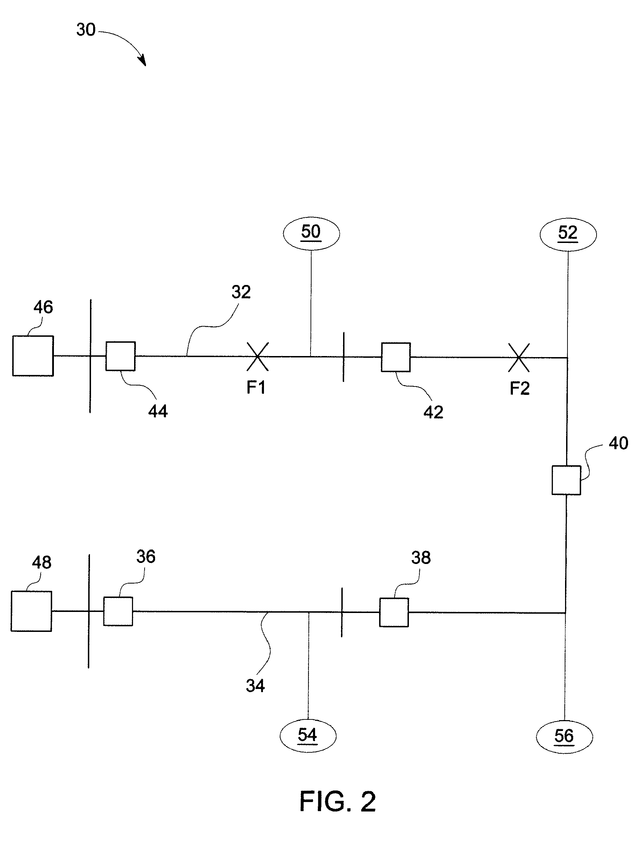

FIG. 2 shows a recloser loop scheme 30 in accordance with an embodiment of the present invention. The recloser loop scheme 30 includes substations 46 and 48, with two feeders 32 and 34, and consumers 50, 52, 54, 56. Distribution feeders 32 and 34 are connected through a tie recloser switch 40. During normal operation, tie recloser switch 40 is open and the distribution substations 46 and 48 provide electrical service to distribution feeders 32 and 34 respectively. Recloser loop scheme 30 includes four feeder reclosers 36, 38, 42, 44 and tie line recloser 40 coordinated with each other. The reclosers 36, 38, 42, 44 and 40 and/or the substations 46 and 48 include a controller, which will be described in detail below.

In operation, when the system is first deployed and commissioned, the reclosers communicate with each other through a predetermined, locally available communications network. Each recloser automatically surveys other alternate, locally available data communication systems, according to a preprogrammed set of instructions. Acting together, the reclosers determine the available alternate paths and their system cost functions according to the preprogrammed objective functions. The recloser network creates a ranking of all available communications paths based on their system cost and stores this information at each recloser. The recloser network periodically surveys the locally available communications paths and updates the ranking. The reclosers also communicate with substations 46 and 48 to determine the capacity of each substation. This information is used to determine if each substation can supply power to the other feeder's consumers in case of a fault, through a process known as backfeeding. This information is also stored at each recloser. When a permanent fault occurs, for example at F1, recloser 44 operates through its reclosing sequence, locks out, and transmits information regarding its status and the fault condition to the other reclosers over the communication paths. Recloser 44 transmits this information using the communications paths previously determined through the objective function; thus it may send the data simultaneously over one or many paths. After recloser 44 locks out, consumers 50 and 52 lose electrical services and experience an outage. A feeder recloser controller (not shown) on recloser 42 and tie switch 40 receive the information transmitted from recloser 44, and may also senses the loss of the feeder 32 voltage. Based on this aggregate information, recloser 42 opens. If substation 48 has sufficient capacity to backfeed consumers 52, tie switch 40 closes, and substation 48 restores electrical service to consumers 52. In this manner, the fault is efficiently isolated and only customers 50 loose electrical service.

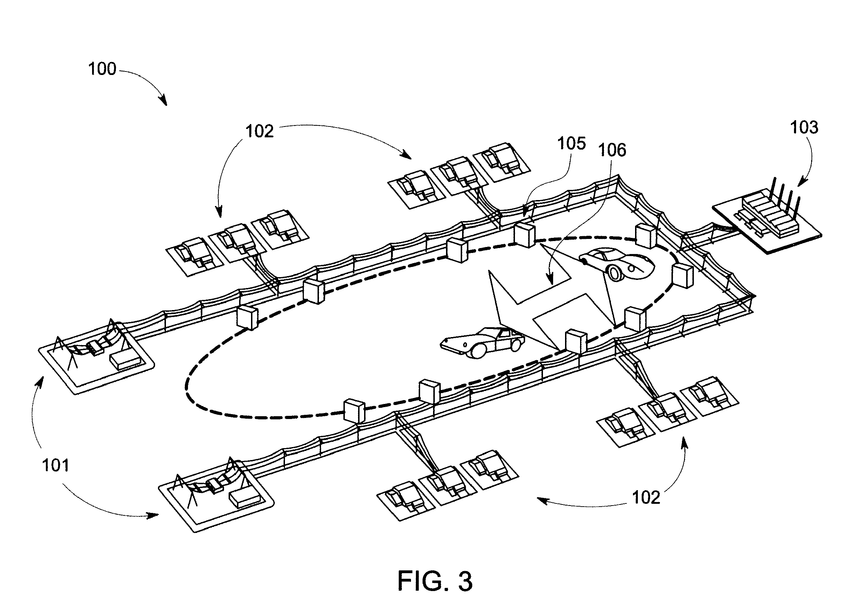

FIG. 3 shows a recloser system 100 in accordance with an embodiment of the present invention. System 100 includes substations 101 that deliver power to residential areas 102 and an industrial site 103. In accordance with an embodiment of the present invention, any wireless network available within the recloser system vicinity may be used for communication between various reclosers. For example, in one embodiment, the wireless network comprises a dedicated radio link (not shown) used for communication between reclosers.

In one exemplary embodiment, as shown in Figure 3, the wireless network comprises a vehicular ad-hoc network (VANET) 106. VANET 106 is a technology that uses radio equipment located in moving cars as nodes in a network to create a mobile network. This radio equipment may consist of commercial data communications technology including, but not limited to WiFi and WiMAX with protocols designed for inter-vehicle communication. VANET 106 turns every participating car into a wireless router or node, allowing cars approximately within 100 to 300 meters of each other to connect and, in turn, create a network with a wide range. As cars drive out of the reclosers' radio range and drop out of the network, other cars can join in, connecting vehicles to one another so that a local, mobile ad hoc network is created in the vicinity of the recloser networks formed of recloser 105. It can be seen that in this embodiment, the communication between reclosers 102 may be made more reliable if VANET 106 has a reliable network with sufficient capacity. Other wireless networks that may be leveraged comprise Wireless Fidelity (WIFI), Worldwide Interoperability for Microwave Access (WIMAX), cellular telephony such as Global System for Mobile Communications (GSM), 802.11s mesh system, wireless Ethernet, Low power Wireless Personal Area Networks (6LowPAN), and Routing Over Low power and Lossy networks (ROLL), for example. In one embodiment, the most important information or data is sent over dedicated electric utility radios and the less important information or data is sent along other wireless networks if necessary. The importance of information is determined by the user or by any suitable method.

As can be seen there can be multiple routes through which the feeder reclosers can communicate with each other. Thus, in accordance with an embodiment of the present invention, a weight is given to each of the available routes and based on an objective function decided by the user, or preprogrammed, a specific route may be selected. The weights may depend on various factors including, but not limited to cost of communication and speed of communication. Similarly, the objective function may comprise minimization of critical consumer metrics including, but not limited to, financial cost, data transfer delay or combinations thereof. The objective function may further comprise minimization of electric power distribution reliability indices, such as System Average Interruption Duration Index (SAIDI) and Momentary Average Interruption Event Frequency Index (MAIFI). SAIDI is the sum of all consumer interruption durations divided by the number of consumers and MAIFI is the number of interruptions greater than a specified duration divided by the number of consumers. The critical consumer metrics and electric power distribution reliability indices can be combined to form an overall system cost that will be minimized through the objective function. In another embodiment, packets of communication data may be distributed among various paths for transmission depending on the availability and the desired objective function.

It should be noted that there may be multiple routes in one type of communication method itself. For example, when the data is being transferred through power lines i.e. wired method of communication, there can be multiple paths or communication links from one recloser to another recloser. Thus, in one embodiment, the multiple routes in one communication method itself are selected based on an optimization function. For example, network routing metrics may be assigned to various communication links in order to indicate a cost for routing over that link; a low cost link will be preferred over a high cost link. These metrics can be user-defined and in one embodiment links that follow the same route as the shortest electric power lines are assigned an arbitrarily lower cost than routes that would leave the shortest path of the power lines. This forces the flow of data along specific, optimal paths. A Geographic Information System (GIS) information may be used by the system to determine which power line links provide the shortest route.

In another exemplary embodiment, a media access control (MAC) protocol based on a Global Positioning System (GPS) and Geographic Information System (GIS) information may be used for transmitting the data. MAC provides addressing and channel access control mechanisms that make it possible for several network nodes to communicate within a multi-point network. In one embodiment, MAC protocol layer decides when to transmit data packets based on information from the GPS and GIS. The GPS provides information about the location of a radio or any other node, and the GIS provide information regarding the radio environment. Thus, the information from GPS and GIS can be processed to provide estimates of the range and the power of the radio frequency (RF) data that need to be transmitted for successful communication between nodes. GPS and GIS information further can be used for providing a framework within which MAC transmission timing can be deterministically computed, thus avoiding the overhead of collisions. The objective of this method is to avoid data transmission collisions with neighboring radios while also scheduling the transmissions rapidly enough to meet the required data transmission load. In another embodiment, additional information derived from the GIS including terrain, foliage, and building density information further refmes required RF transmitter power levels. Generally, most MAC protocols are decentralized with a random back off upon detection of a collision. However, in the present embodiment, given the fact that radios are outdoors and residing at stationary locations, the MAC layer transmission is scheduled based upon the GPS-obtained position and local environment information from a GIS database.

In another exemplary embodiment, to further improve the communication between reclosers, a multicast group can be formed in which a single packet transmission reaches all receiving nodes simultaneously. All nodes along a given power line may reside in a single multicast group. As will be appreciated by those skilled in the art, a multicast may be used for data transfer between various nodes. It should be noted here that the node may mean a recloser, a radio, a car in an VANET or other communication points in the wired or wireless networks. At the originating node i.e. from the recloser from where the data needs to be transferred, the data is transmitted simultaneously to multiple nodes or reclosers while sharing common paths through the network. This results in faster communication compared to transmitting the same packet to a set of nodes, one at a time.

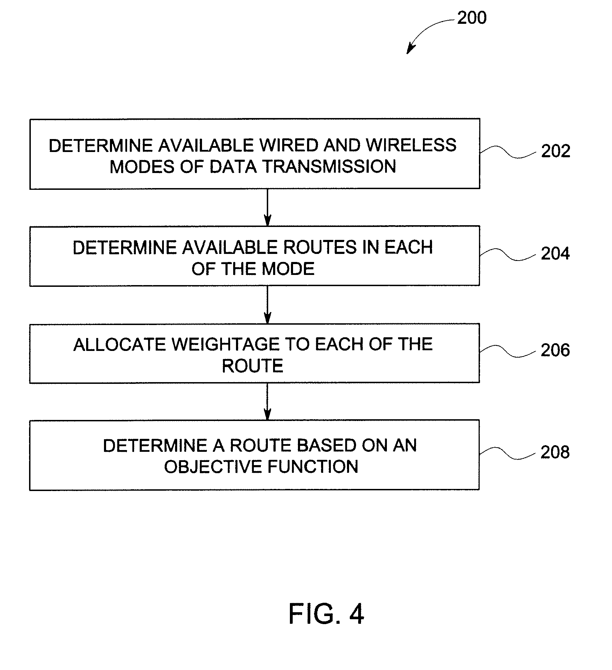

FIG. 4 shows a method 200 of DA communication in a power grid. The method includes determining available modes of data transmission between the source and destination nodes at step 202. The available modes may include wired communication mode or wireless communication mode. The wired communication mode includes wired communication links through power lines and the wireless communication mode includes power grid radio links and other opportunistic routing such as WIFI, WIMAX stations, GSM, and VANET, for example.

Once the communication modes are identified, in step 204, available routes in each of the communication modes are identified. In step 206, a weight is given to each of the available routes. For example, routes over wired communication mode are given more weight for reliability compared to routes that follow wireless communication mode. Further, wired communication links that follow shortest electric power lines are given more weight based on their low system cost (i.e. financial, latency, reliability, etc.) compared to the wired communication links that do not follow shortest electric power lines. Similarly, the power grid radio links are given more weight compared to other wireless links based on the reliability. The weights may further be based on factors such as system cost of communication and speed of communication.

In step 208, based on the weight of the communication routes and an objective function, a final route for communication may be determined. The objective function may be determined by the user and may include minimization of critical consumer metrics such as system cost, data transfer delay or combinations thereof. The objective function may further comprise minimization of electric power distribution reliability indices, including, but not limited to SAIDI and MAIFI. In another embodiment, packets of communication data may be distributed among various routes for transmission depending on the availability and the desired objective function. For example, in one embodiment, the most important information or data may be transmitted over dedicated power grid radios and the less important, but information may be transmitted along other wireless links if necessary. In another embodiment, packets of communication data may be distributed among various paths for transmission depending on the availability and the desired objective function i.e., the data may be split and transmitted in a parallel manner over a combination of communication links.

In another embodiment, the communication between wireless communication links may further be improved by using a MAC protocol based on a GPS and a Geographic information system (GIS) information. The improvement may be in terms of reduction in message latency, and power and/or increase in bandwidth. The information from GPS and GIS is processed to provide estimates of the best route to use, along with the range and the power of the radio frequency (RF) data that need to be transmitted for successful communication between nodes. GPS and GIS information may be used for providing a framework within which MAC transmission timing can be deterministically computed, thus avoiding the overhead of data collisions.

In another embodiment, to improve the efficiency of the wireless communication a multicast group may be formed in which a single packet transmission reaches all receiving nodes simultaneously. At the originating node i.e. from the recloser from where the data needs to be transferred, the data is transmitted simultaneously to multiple nodes or reclosers.

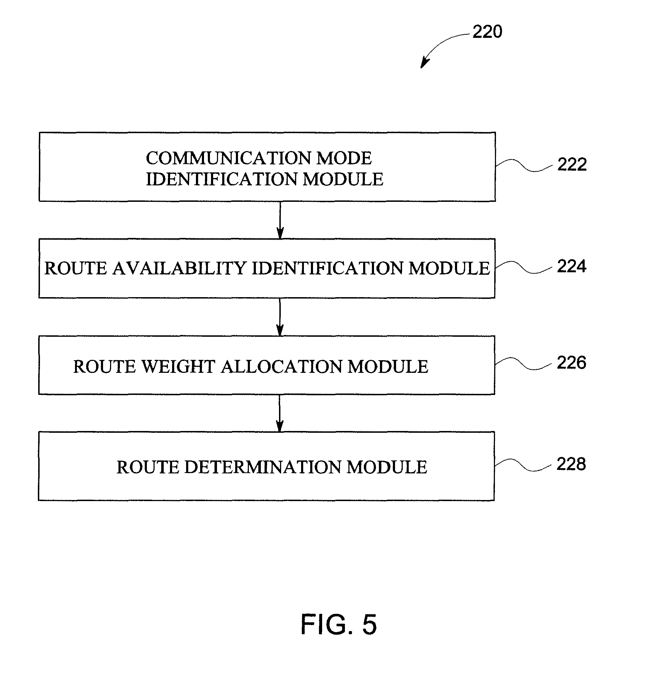

FIG. 5 shows a power grid communication controller system 220 according to an exemplary embodiment. The controller may be incorporated in recloser controller 14 (FIG. 1) for each of the reclosers 36, 38, 42, 44 and 40, which can be separate from or integrated with the recloser, and/or in substation 101, 46, and 48. The controller 220 includes a communication mode identification module 222 for determining available modes of data transmission between the source and destination nodes. As described earlier, the available modes may include wired communication mode or wireless communication mode. A route availability identification module 224 determines available routes in each of the available communication modes determined by module 222. A route weight allocation module 228 allocates or assigns a weight to each of the available routes. The weight allocation may be based on factors such as cost, speed and reliability of communication. Controller 220 also includes a route determination module 228 to identify a final route of communication based on an objective function. The controller 220 can further include a memory or storage device 230 to store communication route information. A program database 232 is also provided to store programs including, but not limited to, the objective function for processing communication routes in the distribution network. As described earlier, the objective function may include minimization of critical consumer metric such as cost, data transfer delay, SAIDI, MAIFI or combinations thereof. In one embodiment, controller 220 may utilize a MAC protocol and/or a multicast group based on A GPS and GIS information to optimize communication.

As will be appreciated by those of ordinary skill in the art, the foregoing example or part of foregoing example and method steps may be implemented by suitable computer program code on a processor-based system, such as a general-purpose or special-purpose computer. It should also be noted that different implementations of the present invention may perform some or all of the steps described herein in different orders or substantially concurrently, that is, in parallel. The computer program code, as will be appreciated by those of ordinary skill in the art, may be stored or adapted for storage on one or more tangible, machine readable media, such as on memory chips, local or remote hard disks, optical disks (that is, CD's or DVD's), or other media, which may be accessed by a processor-based system to execute the stored code. Note that the tangible media may comprise paper or another suitable medium upon which the instructions are printed. For instance, the instructions can be electronically captured via optical scanning of the paper or other medium, then compiled, interpreted or otherwise processed in a suitable manner if necessary, and then stored in a computer memory.

For completeness, various aspects of the invention are now set out in the following numbered clauses:
1. A method of data communication for a power grid comprising:
   determining available wired and wireless modes of data transmission;
   determining available routes in the available wired and wireless modes;
   allocating a weight to each of the available route; and
   determining a final route for communication based on an objective function.
2. The method of clause 1, wherein wired data transmission mode includes wired communication links through power lines.
3. The method of clause 1, wherein the wireless communication mode comprises at least one of private and public wireless communication networks including, but not limited to electric utility radio links, WIFI, WIMAX stations, GSM, 802.11s mesh system, wireless ethernet, 6LowPAN, ROLL, VANET or combinations thereof.
4. The method of clause 2, wherein allocating the weight to each of the available route comprises giving more weight to wired communication links that follow shortest electric power lines compared to the wired communication links that do not follow the shortest electric power lines based on lower system cost.
5. The method of clause 3, wherein allocating the weight to each of the available route comprises giving more weight to electric utility radio links compared to other wireless communication modes based on reliability.
6. The method of clause 1, wherein the weights are based on system cost of communication and speed of communication over the available routes.
7. The method of clause 1, wherein the objective function comprises minimization of a consumer metric.
8. The method of clause 7, wherein consumer metric comprises system cost of communication, data transfer delay or combinations thereof.
9. The method of clause 1, wherein the objective function comprises minimization of electric power distribution reliability indices including SAIDI and MAIFI.
10. The method of clause 1, wherein the final route comprises a combination of available routes.
11. The method of clause 1, further comprising a media access control (MAC) protocol based on a Global Positioning System (GPS) and Geographic information system (GIS) for the wireless communication mode.
12. The method of clause 11, wherein the GPS provides location of a node in the wireless communication mode and the GIS provides node environment information, terrain, foliage, and building density information.
13. The method of clause 11, wherein information from GPS and GIS provides estimates of the optimal route, a range and power of radio frequency data and provides a framework within which MAC transmission timing is computed.
14. The method of clause 1 further comprising a multicast group for transmitting a single packet data simultaneously to all receiving nodes.
15. A non-transitory computer-readable medium comprising computer-readable instructions of a computer program that, when executed by a processor, cause the processor to perform a method, the method comprising:
   determining available wired and wireless modes of data transmission;
   determining available routes in the available wired and wireless modes;
   allocating a weight to each of the available route; and
   determining a final route for communication based on an objective function.
16. A system comprising:
   devices connected to a distribution network; and
   controllers coupled to the devices, respectively;
   wherein each controller comprises:
      a communication mode identification module for determining available wired and wireless modes of data transmission;
      a route availability identification module for determining available routes in the available wired and wireless modes;
      a route weight allocation module for allocating a weight to each of the available route; and
      a route determination module for determining a final route for communication based on an objective function.
17. The system of clause 16, wherein the route weight allocation module allocates the weight based on the system cost of communication, speed of communication, reliability of communication or combinations thereof.
18. The system of clause 16, wherein the objective function comprises minimization of critical consumer metric.
19. The system of clause 18, wherein the critical consumer metric comprises cost of communication, data transfer delay, electric power distribution reliability indices including SAIDI and MAIFI or combinations thereof.
20. The system of clause 16 further comprising a MAC protocol or a multicast groups for optimizing the communication.

## Claims

1. A method of data communication for a power grid comprising:
determining available wired and wireless modes of data transmission;
determining available routes in the available wired and wireless modes;
allocating a weight to each of the available route; and
determining a final route for communication based on an objective function.

2. The method of claim 1, wherein wired data transmission mode includes wired communication links through power lines.

3. The method of claim 1 or claim 2, wherein the wireless communication mode comprises at least one of private and public wireless communication networks including, but not limited to electric utility radio links, WIFI, WIMAX stations, GSM, 802.11s mesh system, wireless ethernet, 6LowPAN, ROLL, VANET or combinations thereof.

4. The method of claim 2, wherein allocating the weight to each of the available route comprises giving more weight to wired communication links that follow shortest electric power lines compared to the wired communication links that do not follow the shortest electric power lines based on lower system cost.

5. The method of any preceding claim, wherein allocating the weight to each of the available route comprises giving more weight to electric utility radio links compared to other wireless communication modes based on reliability.

6. The method of any preceding claim, wherein the weights are based on system cost of communication and speed of communication over the available routes.

7. The method of any preceding claim, wherein the objective function comprises minimization of a consumer metric.

8. The method of claim 7, wherein the consumer metric comprises system cost of communication, data transfer delay or combinations thereof.

9. The method of any one of claims 1 to 6, wherein the objective function comprises minimization of electric power distribution reliability indices including SAIDI and MAIFI.

10. The method of any preceding claim, wherein the final route comprises a combination of available routes.

11. The method of any preceding claim, further comprising a media access control (MAC) protocol based on a Global Positioning System (GPS) and Geographic information system (GIS) for the wireless communication mode.

12. The method of claim 11, wherein the GPS provides location of a node in the wireless communication mode and the GIS provides node environment information, terrain, foliage, and building density information.

13. The method of any preceding claim, further comprising a multicast group for transmitting a single packet data simultaneously to all receiving nodes.

14. A non-transitory computer-readable medium comprising computer-readable instructions of a computer program that, when executed by a processor, cause the processor to perform the method of any one of the preceding claims.

15. A system comprising:
devices connected to a distribution network; and
controllers coupled to the devices, respectively for carrying out the method of any one of claims 1-13;
wherein each controller comprises:
a communication mode identification module for determining available wired and wireless modes of data transmission;
a route availability identification module for determining available routes in the available wired and wireless modes;
a route weight allocation module for allocating a weight to each of the available route; and
a route determination module for determining a final route for communication based on an objective function.
